# EUROPEAN PATENT APPLICATION

(11) **EP 3 753 831 A1**
(43) Date of publication of application: **23.12.2020**
(21) Application number: 19181827.7
(22) Date of filing: 21.06.2019
(51) Int. Cl.: B62K 19/46, B62H 5/00, B62J 1/12, E05B 81/14, E05B 81/24

(54) **ELECTRICALLY UNLOCKED UNDER-SEAT STORAGE COMPARTMENT OF MOTORCYCLE**

(71) Applicant: Hsin Chong Machinery Works Co. Ltd., Taoyuan City 335 (TW); Fuzhou Mingfang Automobile Parts Industry Co Ltd., Fuzhou (CN)
(72) Inventor: HSI, Jeffrey Chung-Chiang, 335 Taoyuan City (TW); HU, Kai-Hong, 335 Taoyuan City (TW); CHIANG, Chih-Ming, 335 Taoyuan City (TW)
(74) Representative: 2K Patentanwälte Blasberg Kewitz & Reichel

(57) **Abstract**

An electric unlocked under-seat storage compartment of motorcycle having a box (100) having an opening (101), a seat cushion (200) covering the opening (101), a seat plate (300) having a latching slot (310) and an actuator (500) fixed to the seat plate (300) is provided. The seat cushion (200) pivots to a side with respect to the opening (101). The seat cushion (200) has a locking hook (210). An end of the latching slot (310) is an opening end (311). A buckle plate (410) and a locking plate (420) are pivoted on the seat plate (300), an edge of the buckle plate (410) is protruded to form a pushing portion (412) and a retaining portion (411) corresponding to the opening end (311). The actuator (500) includes a waterproof housing (510) containing a motor (540) and a pivot (530) linked to the motor (540) and has a push lever (550). The buckle plate (410) locked by the locking plate (420) could stop the retaining portion (411) at the latching slot (310), and the actuator (500) could push the locking plate (420) away from the buckle plate (410).

## Description

### BACKGROUND OF THE INVENTION

### 1. Technical Field

The technical field relates to an electric unlocking under-seat storage compartment for motorcycles, and more particularly to an electric unlocking under-seat storage compartment for motorcycles having a waterproof actuator.

### 2. Description of Related Art

In general, a locking device of a motorcycle compartment is connected to a lock by a steel cable, so that users can use a key to turn the lock to unlock the locking device connected to the steel cable. Some of the electric motorcycles do not come with a lock, so that it is necessary to install an actuator in the locking device in order to unlock the locking device through an electronic control. However, the motorcycles are usually situated in an outdoor environment, so that water may enter into the actuator and damage the actuator easily. A traditional method overcomes this problem by installing a waterproof structure onto the motorcycle body, so that the motorcycle body must have a port provided for passing the locking hook, and the locking device is installed under the port, and the actuator is installed at a position proximate to the locking device. Since water may enter from the port easily, therefore it is not easy to design the waterproof structure.

In view of the aforementioned drawbacks, the discloser of this disclosure based on years of experience in the related industry to conduct extensive research and experiment, and finally provided a feasible solution to overcome the drawbacks of the prior art.

### SUMMARY OF THE INVENTION

Therefore, it is a primary object of this disclosure to overcome the drawbacks of the prior art by providing an electric unlocked under-seat storage compartment having a waterproof actuator.

To achieve the aforementioned and other objectives, this disclosure provides an electric unlocked under-seat storage compartment, installed onto a motorcycle and comprising a box, a seat cushion, a seat plate, and an actuator. The box is disposed the motorcycle and the box has an opening. The seat cushion covers the opening and can be pivotally rotated with respect to a side of the opening, and the seat cushion has a locking hook extending towards the box. The seat plate is installed to the motorcycle and configured to be corresponsive to the position of the locking hook, wherein a locking hook is formed at an edge of an seat plate and latched into the latching slot, and an end of the latching slot is an opening end, and the seat plate has a buckle plate and a locking plate pivoted thereto, and an edge of the buckle plate is protruded to form a pushing portion and a retaining portion configured to be corresponsive to the opening end. The actuator is fixed onto the seat plate and comprises a waterproof housing. The waterproof housing contains a motor, and the waterproof housing has a pivot with an end contained in the waterproof housing and linked to the motor and the other end passing out from the waterproof housing and having a push lever. The buckle plate can be rotated to overlap the retaining portion with the latching slot. After passing through the opening end and latches into the latching slot, the locking hook pushes the pushing portion, so that the buckle plate is rotated to stop the retaining portion at the opening end of the latching slot, and the locking plate is fixed to the buckle plate to fix the locking hook into the latching slot, and the actuator can drive the push lever to rotate, so that the push lever pushes the locking plate away from the buckle plate.

In the electric unlocked under-seat storage compartment of this disclosure, a spring is coupled between the buckle plate and the locking plate, and the connection points of the spring with the buckle plate and the locking plate are disposed on a side where the pivot center of the buckle plate and the pivot center of the locking plate are coupled, and the retaining portion is disposed on the other side wherein the pivot center of the buckle plate and the pivot center of the locking plate are coupled. The buckle plate can be rotated, so that the pushing portion passes through the connection line of the pivot center of the buckle plate and the pivot center of the locking plate. The pivot center of the buckle plate and the pivot center of the locking plate are disposed on both sides of the latching slot respectively. The waterproof housing comprises a pair of shells engaged with one another, and a sealing strip included between the pair of shells, and the motor is accommodated in the pair of shells, and the pivot is penetrated and pivotally coupled to one of the shells. The waterproof housing has a wiring port formed thereon, and the motor is coupled to the wire, and the wire passes through the wiring port and out from the waterproof housing, and the wiring port is configured to be facing downward to prevent water from entering into the motor.

In the electric unlocked under-seat storage compartment of this disclosure, the actuator has a waterproof housing and a sealing strip to provide an effective waterproof effect without requiring a complicated waterproof structure to be installed on a motorcycle body.

### BRIEF DESCRIPTION OF THE DRAWINGS

FIG. 1 is a perspective view of an electric unlocked under-seat storage compartment in accordance with a preferred embodiment of this disclosure;
FIG. 2 is a schematic view showing the configuration of an actuator of an electric unlocked under-seat storage compartment in accordance with a preferred embodiment of this disclosure;
FIG. 3 is an exploded view of an actuator of an electric unlocked under-seat storage compartment in accordance with a preferred embodiment of this disclosure; and
FIG. 4 is a perspective view of an electric unlocked under-seat storage compartment in accordance with a preferred embodiment of this disclosure.

### DESCRIPTION OF THE PREFERRED EMBODIMENTS

The technical contents of this disclosure will become apparent with the detailed description of preferred embodiments accompanied with the illustration of related drawings as follows. It is intended that the embodiments and drawings disclosed herein are to be considered illustrative rather than restrictive.

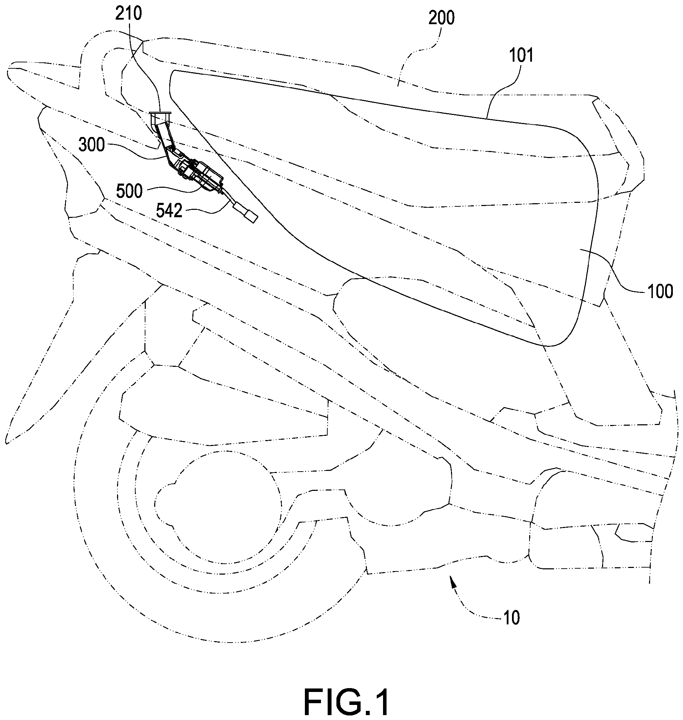

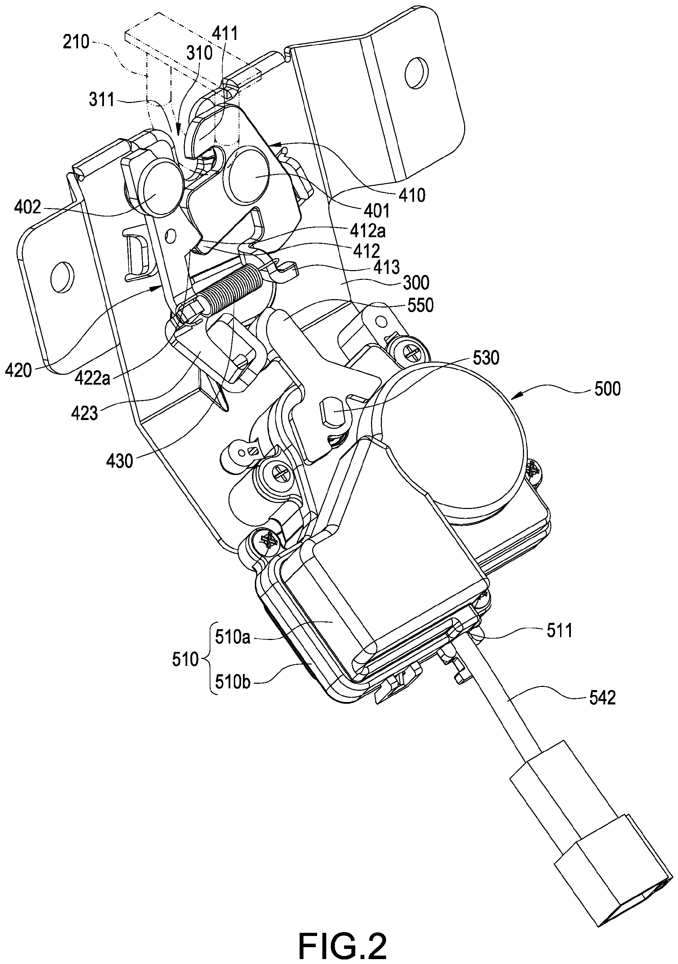

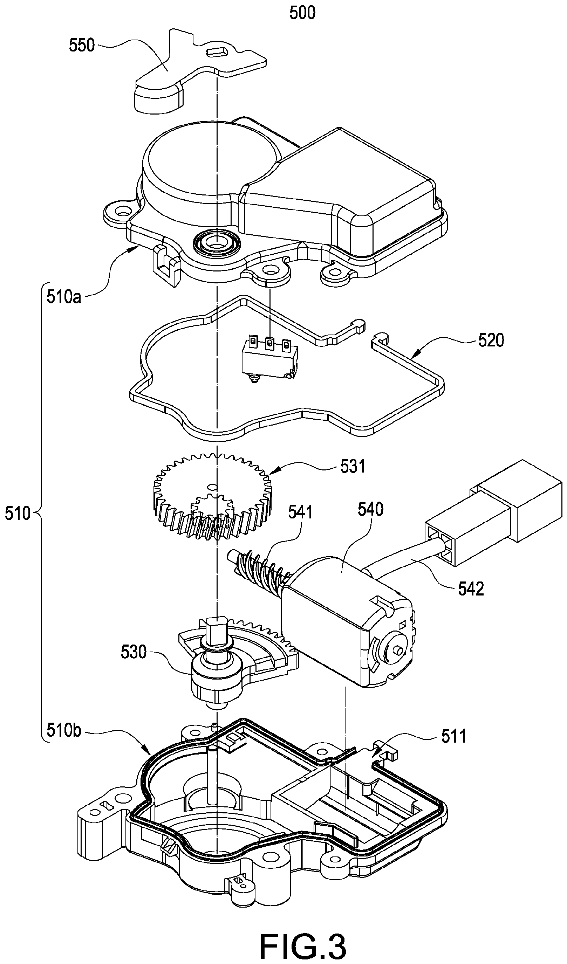

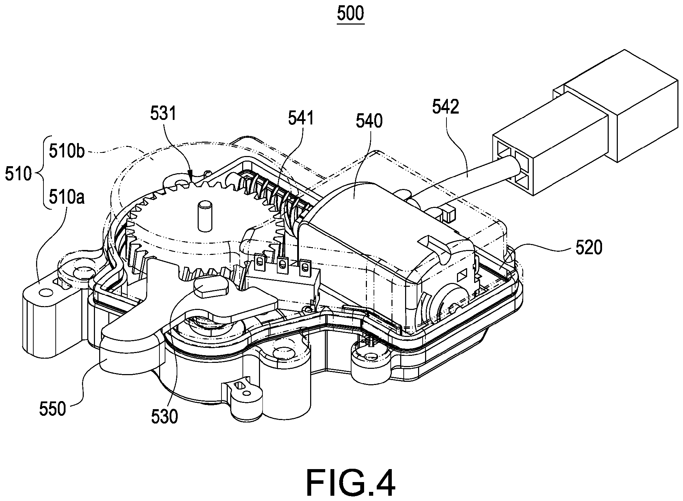

With reference to FIGS. 1 to 4 for an electric unlocked under-seat storage compartment in accordance with a preferred embodiment of this disclosure, the electric unlocked under-seat storage compartment is installed onto a motorcycle 10. The electric unlocked under-seat storage compartment of this disclosure comprises a box 100, a seat cushion 200, a seat plate 300 and an actuator 500.

The box 100 is installed to the motorcycle 10, and an opening 101 is formed at the top of the box 100. The seat cushion 200 is installed horizontally to cover the opening 101 of the box 100, and a side of the seat cushion 200 is pivotally coupled to the motorcycle 10 or pivoted with respective to a side of the opening 101 formed on the box 100. The seat cushion 200 has a locking hook 210 disposed at the bottom thereof, and the locking hook 210 extends downwardly towards the box 100.

The seat plate 300 is installed onto the motorcycle 10 and at a position corresponding to the locking hook 210, and a latching slot 310 is concavely formed at an upper edge of the seat plate 300 and provided for latching the locking hook 210, wherein the latching slot 310 is preferably configured to be extending vertically up and down, and the top of the latching slot 310 is an opening end 311, and the bottom of the latching slot 310 is a closed end.

The seat plate 300 has a buckle plate 410 and a locking plate 420 pivoted thereto, and the buckle plate 410 and the locking plate 420 are preferably plate-shaped link levers, and the pivot center 401 of the buckle plate 410 and the pivot center 402 of the locking plate 420 are disposed on both sides of the latching slot 310 respectively.

The buckle plate 410 is an elongated plate extending vertically up and down, and the pivot center 401/402 of the buckle plate 410 is disposed at the middle section of the buckle plate 410, and an edge of the middle section of the buckle plate 410 is protruded horizontally towards the latching slot 310 to form a pushing portion 412, and a locking slot 412a is concavely formed at an end of the pushing portion 412, and the top edge of the buckle plate 410 is protruded towards the latching slot 310 to convexly form a retaining portion 411, and the retaining portion 411 is configured to be corresponsive to the opening end 311 of the latching slot 310, and a first actuating arm 413 is formed at the bottom of the buckle plate 410.

The locking plate 420 is an elongated plate extending vertically up and down, and the pivot center 401/402 of the locking plate 420 is disposed at the top of the buckle plate 410, and an edge of the middle section of the locking plate 420 has a tenon 422a convexly formed at an edge of the middle section horizontally facing the latching slot 310, and a second actuating arm 423 is formed at the bottom of the locking plate 420.

A spring 430 is coupled between the buckle plate 410 and the locking plate 420, and both ends of the spring 430 are coupled to the first actuating arm 413 and the second actuating arm 423 respectively to drive the buckle plate 410 and the locking plate 420 to pivot and move closer to each other. The connection points of the spring 430 with the buckle plate 410 and the locking plate 420 are disposed the bottom side where the pivot center 401 of the buckle plate 410 and the pivot center 402 of the locking plate 420 are coupled, and the retaining portion 411 is disposed on the top side where the pivot center 401 of the buckle plate 410 and the pivot center 402 of the locking plate 420 are coupled.

The pivotal stroke of the buckle plate 410 is described below. The buckle plate 410 can be rotated, so that the pushing portion 412 passes through the connecting line of the pivot center 401 of the buckle plate 410 and the pivot center 402 of the locking plate 420. Specifically, the pushing portion 412 can move between both ends of the latching slot 310, so that when the locking hook 210 moves in the latching slot 310, the locking hook 210 can push the pushing portion 412. In addition, the buckle plate 410 can be rotated, so that the retaining portion 411 and the latching slot 310 are overlapped or the retaining portion 411 is withdrawn from the latching slot 310. When the pushing portion 412 moves towards the opening end 311, the retaining portion 411 retracts from the latching slot 310; and the pushing portion 412 moves away from the opening end 311, the retaining portion 411 overlaps with the latching slot 310.

After the locking hook 210 passes through the opening end 311 and latches to the bottom of the latching slot 310, the pushing portion 412 is pushed, so that the buckle plate 410 is rotated to stop the retaining portion 411 at the opening end 311 of the latching slot 310. Now, the tenon 422a of the locking plate 420 latches into the locking slot 412a of the buckle plate 410, so that the buckle plate 410 cannot be rotated in a reverse direction, and the locking hook 210 can be fixed into the latching slot 310.

The actuator 500 is fixed onto the seat plate 300, and the actuator 500 includes a waterproof housing 510 having a motor 540 contained therein, and a pivot 530 disposed on the waterproof housing 510, and an end of the pivot 530 is contained in the waterproof housing 510 and linked to the motor 540, and the other end of the pivot 530 is passed out from the waterproof housing 510 and has a push lever 550 disposed thereon. Specifically, the motor 540 has a rotatable driving shaft 541 engaged and linked between the driving shaft 541 and the pivot 530 by a gear 531, so that the motor 540 can drive the pivot 530 to rotate by a driving shaft 541 to drive the push lever 550 to swing. The waterproof housing 510 comprises a pair of shells 510a/510b engaged with each other and a sealing strip 520 clamped between the pair of shells 510a/510b to prevent water from entering into the waterproof housing 510, and the motor 540 is contained in the pair of shells 510a/510b, and the pivot 530 is penetrated and connected to a shell 510a to a wiring port 511 of the waterproof housing 510, and a wire 542 is coupled to the motor 540 for supplying power to the motor 540 and controlling the motor 540, wherein the wire 542 is passed through the wiring port 511 and out from the waterproof housing 510, and the wiring port 511 is configured to be facing downward to prevent water from entering into the waterproof housing 510.

The actuator 500 can drive the push lever 550 to rotate, so that the push lever 550 drives the second actuating arm 423 to push the locking plate 420 away from the buckle plate 410. After the locking plate 420 pushes away the buckle plate 410, the tenon 422a retracts from the locking slot 412a, and the spring 430 pulls the first actuating arm 413 to move closer to the second actuating arm 423, so that the buckle plate 410 can be rotated to deviate the locking slot 412a from the moving path and unlocked, and the retaining portion 411 can be retracted from the latching slot 310.

In an electric unlocked under-seat storage compartment of this disclosure, the actuator 500 has a waterproof housing 510 and a sealing strip 520, and the wiring port 511 is configured to be facing down to prevent water from entering into the motor 540 to achieve the waterproof effect effectively without requiring a complicated waterproof structure installed onto the motorcycle body.

## Claims

1. An electric unlocked under-seat storage compartment, installed onto a motorcycle (10), comprising:
a box (100), disposed on the motorcycle (10), and having an opening (101);
a seat cushion (200), covering the opening (101) and pivotally rotatable with respect to a side of the opening (101), and the seat cushion (200) having a locking hook (210) disposed thereon and extending towards the box (100);
a seat plate (300), configured to be corresponsive to the locking hook (210) and installed to the motorcycle (10), and a latching slot (310) being formed at an edge of the seat plate (300) for latching the locking hook (210), and an end of the latching slot (310) being an opening end (311), and a buckle plate (410) and a locking plate (420) being pivoted to the seat plate (300), and a pushing portion (412) being convexly formed at an edge of the buckle plate (410), and a retaining portion (411) being configured to be corresponsive to the opening end (311); and
an actuator (500), mounted onto the seat plate (300), and comprising a waterproof housing (510) for receiving a motor (540) therein, and the waterproof housing (510) having a pivot (530) pivoted thereto, and an end of the pivot (530) being received in the waterproof housing (510) and linking with the motor (540), and the other end of the pivot (530) passing out of the waterproof housing (510) and having a push lever (550) installed thereto,
wherein, the buckle plate (410) is rotatable to a position such that the retaining portion (411) overlaps the latching slot (310), and when the locking hook (210) passes through the opening end (311) and latches into the latching slot (310), the locking hook (210) pushes the pushing portion (412), so that the buckle plate (410) rotates the retaining portion (411) to stop at the opening end (311) of the latching slot (310), and the locking plate (420) is fixed to the buckle plate (410), and the locking hook (210) is fixed into the latching slot (310), and the actuator (500) drives the push lever (550) to rotate, so that the push lever (550) pushes the locking plate (420) away from the buckle plate (410).

2. The electric unlocked under-seat storage compartment according to claim 1, further comprising a spring (430) coupled between the buckle plate (410) and the locking plate (420), and the connection points of the spring (430) with the buckle plate (410) and the locking plate (420) are disposed on a side where a pivot center (401) of the buckle plate (410) and a pivot center (402) of the locking plate (420) are coupled, and the retaining portion (411) is disposed on the other side where the pivot center (401) of the buckle plate (410) and the pivot center (402) of the locking plate (420) are coupled.

3. The electric unlocked under-seat storage compartment according to claim 1, wherein the buckle plate (410) is rotated, so that the pushing portion (412) passes through the connection line of a pivot center (401) of the buckle plate (410) and a pivot center (402) of the locking plate (420).

4. The electric unlocked under-seat storage compartment according to claim 1, wherein the buckle plate (410) and the locking plate (420) have pivot centers (401) (402) disposed on both sides of the latching slot (310) respectively.

5. The electric unlocked under-seat storage compartment according to claim 1, wherein the waterproof housing (510) comprises a pair of shells (510a/510b) engaged with each other, and a sealing strip 520 sandwiched between the pair of shells (510a/510b), and the motor (540) is received into the pair of shells (510a/510b), and the pivot (530) penetrates through and pivotally couples one of the shells (510a/510b).

6. The electric unlocked under-seat storage compartment according to claim 1, wherein the waterproof housing (510) has a wiring port (511) formed thereon, and the motor (540) is coupled to a wire (542), and the wire (542) passes through the wiring port (511) and out from the waterproof housing (510), and the wiring port (511) is configured to be facing downward.
